Europäisches Patentamt

**European Patent Office**

**Office européen des brevets**

(11) Numéro de publication: **0 263 562 B1**

(12) **FASCICULE DE BREVET EUROPEEN**

(45) Date de publication de fascicule du brevet:
03.04.91

(51) Int. Cl.5: **F16D 65/16,** F16D 65/56,
F16D 55/224

(21) Numéro de dépôt: 87201895.7

(22) Date de dépôt: 05.10.87

(54) **Dispositif pour la commande mécanique manuelle d'un frein hydraulique à disque pour véhicule.**

(30) Priorité: 09.10.86 IT 5392186 U

(43) Date de publication de la demande:
13.04.88 Bulletin 88/15

(45) Mention de la délivrance du brevet:
03.04.91 Bulletin 91/14

(84) Etats contractants désignés:
**AT BE DE ES FR GB**

(56) Documents cités:
FR-A- 2 073 593
FR-A- 2 559 224
US-A- 2 847 238
US-A- 3 384 204
US-A- 4 256 206

(73) Titulaire: **BENDIX ALTECNA S.p.A.**
**Zona Industriale Casella Postale 27**
**I-70026 Modugno (Bari)(IT)**

(72) Inventeur: **Zucca Pol, Bruno**
**Via Rua 24**
**I-10081 Castellamonte Torino(IT)**

(74) Mandataire: **Lejet, Christian**
**BENDIX FRANCE Division Technique Service**
**Brevets Bendix Europe 126 rue de Stalingrad**
**F-93700 Drancy(FR)**

EP 0 263 562 B1

## Description

La présente invention concerne un dispositif pour la commande mécanique manuelle d'un frein hydraulique à disque pour véhicule.

Soit pour des raisons de sécurité, soit dans le but de respecter des dispositions de loi, les véhicules doivent être pourvus, en plus des freins hydrauliques, de freins de stationnement et de secours à commande mécanique manuelle. Pour éviter l'installation de moyens de freinage séparés, qui entraînent des frais considérables, ces freins à commande mécanique manuelle sont habituellement réalisés en ajoutant aux dispositifs hydrauliques servant à actionner les freins des roues postérieures du véhicule, des moyens qui, actionnés à la main, déterminent mécaniquement le déplacement du piston hydraulique d'actionnement.

Dans le cas de freins à disque, ces moyens d'actionnement mécanique sont formés par un dispositif comprenant un levier et un pivot installé de façon pivotante dans le corps de l'étrier du frein en correspondance de la tête du cylindre hydraulique. Le pivot est pourvu, à l'intérieur de la tête du cylindre, d'un mécanisme à came capable de pousser le piston hydraulique, et à l'extérieur il est relié au levier d'actionnement, sur l'extrémité duquel agit une tringle flexible (câble bowden) venant du frein à main. Une coiffe de protection en caoutchouc couvre la tête du cylindre et le pivot mentionné. En général, le levier d'actionnement de ces dispositifs est réalisé en moulage de fonte, et il présente à son extrémité externe des configurations destinées à recevoir la connexion de la tringle d'actionnement, et à son extrémité interne un moyeu relié au pivot moyennant soudage, calage, crabotage ou autre moyen d'accouplement similaire.

La construction du dispositif au moyen d'un pivot et d'un levier ainsi réalisés séparément et puis reliés présente des inconvénients. L' opération de connexion entre les deux parties mentionnées entraîne des temps et des coûts de travail non indifférents. Dans l'organisation de la production on doit prévoir la gestion de trois pièces distinctes: le pivot, le levier et l'ensemble formé par un pivot avec un levier appliqué. Le levier réalisé de la façon traditionnelle indiquée est considérablement lourd, ce qui représente un inconvénient soit pour le coût du matériau employé, soit pour le poids de e'élément qui en résulte, spécialement si l'on considère le fait que ce détail fait partie des masses non suspendues du véhicule. L'encombrement du moyeu du levier, servant à permettre le calage de ce dernier sur le pivot, fait obstacle au montage de la coiffe de protection et oblige à réaliser cette dernière d'une façon telle à faire étanchéité frontalement sur le moyeu du levier, en donnant ainsi lieu à des frictions indésirées. Des leviers différents, et des moules de coulée y relatifs, doivent être prévus pour satisfaire aux exigences d'installations différentes dans lesquelles la direction d'arrivée de la tringle d'actionnement n'est pas la même. Enfin, la réalisation du levier en fonte entraîne une certaine incidence de défauts de coulée et de ruptures possibles qui s'ensuivent pendant le fonctionnement, tandis que la connexion entre le levier et le pivot donne lieu parfois à des défauts de solidarité entre les parties.

On connaît par le document US-A-3384 204 un dispositif mécanique d'actionnement d'un frein hydraulique à disque dans lequel le levier de commande à une forme complexe, qui ne peut être obtenue que par fonderie ou estampage, avec tous les inconvénients mentionnés ci-dessus.

Le but de la présente invention est de perfectionner et de rationaliser le dispositif à pivot et levier pour la commande mécanique manuelle d'un frein hydraulique à disque pour véhicule, de sorte à en réduire le prix de revient et le poids, à en simplifier la gestion productive, à réduire les probabilités de défauts, pratiquement jusqu'à les annuler, à rendre possible une unification étendue dans la production des leviers destinés à des installations différentes, et à rendre possible une disposition plus rationnelle de la coiffe de protection.

On atteint ce but selon la présente invention par le fait que le pivot présente, à partir de ladite extrémité de la première partie, une partie initiale cylindrique destinée à coopérer avec une coiffe de protection, une partie intermédiaire cylindrique courbée de 180° formant levier, et une partie terminale cylindrique dans laquelle sont usinées les conformations destinées à recevoir la connexion de la tringle d'actionnement, lesdites parties initiale, intermédiaire et terminale étant d'une seule partie en acier tréfilé.

Grâce à ces dispositions, le pivot et le levier forment un seul élément intégré, et cela simplifie la gestion des éléments et élimine systématiquement les inconvénients dérivant de défauts de connexion. Le levier est formé par le même matériau dont est formé le pivot, c'est à dire par de l'acier tréfilé, lequel, à différence d'un moulage en fonte, donne une garantie pratiquement totale d'être exempt de défauts. Le coût de l'opération de cintrage d'une partie du pivot est bien inférieur à la somme des coûts de moulage du levier et de connexion de ce dernier au pivot. Le poids de l'ensemble constitué par le pivot et le levier peut être réduit en une mesure considérable, de l'ordre de 35%. Les conformations destineés à recevoir l'extrémité de la tringle d'actionnement sont formées sur la partie terminale du pivot courbé, et elles peuvent être usinées en des positions différentes selon les exigences d'installation, en partant de pièces identiques. La coiffe de protection peut être montée plus facilement, et elle peut coopérer avec la partie initiale cylindrique du pivot au lieu qu'avec un moyeu, et donc elle travaille radialement sur le plus petit diamètre possible, au lieu qu'axialement sur un diamètre plus grand, en réalisant ainsi une efficacité plus élevée avec un frottement plus réduit.

Ces caractéristiques et d'autres, et les avantages de l'objet de la présente invention, ressortiront mieux par la suivante description d'une forme de réalisation, donnée à titre d'exemple non limitatif, représentée schématiquement dans le dessin annexé, dans lequel:

Fig. 1 montre la tête du cylindre hydraulique d'un étrier pour frein à disque, pourvue d'un dispositif de commande mécanique manuelle, partiellement en coupe dans l'axe du pivot dudit dispositif (c'est à dire selon la ligne I-I de la figure 2);

Fig. 2 en montre une section faite selon la ligne II-II de la figure 1;

Fig. 3 montre le pivot isolé avec une partie courbée formant un levier, et

Fig. 4 en montre une section faite selon la ligne brisée IV-IV de la figure 3.

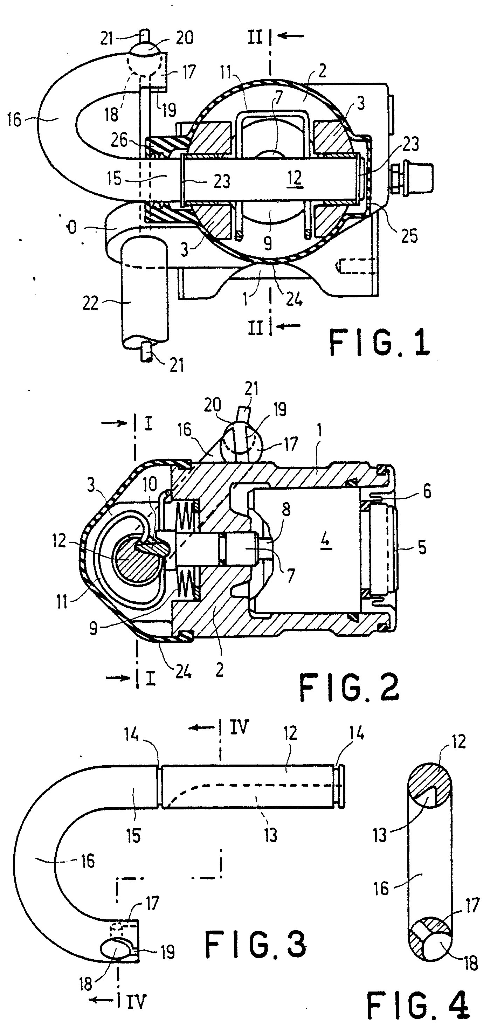

Faisant référence d'abord aux figures 1 et 2, la référence 1 designe le cylindre hydraulique d'un étrier pour un frein à disque, cylindre qui est formé dans le corps même de l'étrier (dont les autres parties ne sont pas représentées), et dans lequel est monté d'une manière coulissante un piston 4 se terminant à son extrémité externe par un poussoir 5 destiné à agir sur un patin de freinage (non représenté). Un soufflet de protection 6 protège l'accouplement coulissant entre le cylindre 1 et le piston 4. Le cylindre 1 a une tête 2 s'étendant de sorte à former des paliers 3 qui constituent des paliers pour le pivot d'un dispositif de commande mécanique manuelle. La tête 2 du cylindre 1 est traversée de façon étanche par un poussoir 7 disposé pour agir sur le piston 4 avec l'interposition d'un dispositif 8 de rattrapage des déplacements dûs à l'usure des garnitures de frottement; ce dispositif de rattrapage 8, bien connu en soi, est situé à l'intérieur du piston 4 et il n'est pas représenté en particulier. Le poussoir 7 est normalement repoussé vers une position de repos par un ensemble de ressorts plats 9, et il reçoit l'action du dispositif de commande mécanique manuelle à travers une lame 10. Enfin, un ressort 11 est pourvu pour repousser normalement dans sa position de repos le dispositif mécanique de commande manuelle.

Les parties décrites jusqu'ici sont bien connues en soi. Le cylindre 1 est destiné à recevoir dans son intérieur un liquide sous pression qui, en agissant sur le piston 4, réalise au moyen du poussoir 5 l'application d'un patin de freinage sur un disque de frein, en donnant ainsi lieu au freinage hydraulique. De son côté, le poussoir 7, lorsqu'il est actionné au moyen de la lame 10 contre l'action des ressorts 9 et 11, pousse le piston 4 à travers le dispositif de rattrapage 8 et, au moyen du poussoir 5, réalise le freinage mécanique. Ces parties, en soi-mêmes bien connues, dont la conformation structurelle peut être modifiée dans les différentes formes de réalisation, ne demandent pas des modifications pour l'application de la présente invention.

Le dispositif de commande mécanique manuelle comprend un pivot, dont une première partie 12 est cylindrique et pivotée dans les paliers 3 de la tête 2 du cylindre 1. La partie 12 du pivot est usinée de façon à présenter une encoche excentrique 13 (figures 3 et 4) dans laquelle engagent la lame 10 et le ressort de rappel 11, déjà mentionnés. Cette première partie 12 du pivot, avec son encoche 13, correspond encore substantiellement aux parties homologues des dispositifs connus.

La partie 12 du pivot est délimitée par des gorges 14 dans lesquelles sont insérées des bagues élastiques 23 destinées à retenir le pivot dans sa position correcte par rapport à la tête 2 du cylindre 1. A une extrémité de la première partie 12 du pivot, au-delà de la gorge 14 mentionnée, s'étend une partie cylindrique initiale 15 suivie par une partie intermédiaire 16 courbée de 180° ; cette dernière, enfin, est suivie par une partie terminale cylindrique 17. Dans la partie terminale cylindrique 17 est formé un siège 18 pour l'insertion d'une tête 20 appartenant à l'extrémité d'une tringle flexible 21 venant du levier d'actionnement du frein à main (non représenté). La tringle flexible 21 glisse dans une gaine 22 en formant ainsi un ainsi-dit câble bowden, et l'extrémité de la gaine 22 prend appui sur une butée 0 du corps 1 du cylindre de l'étrier du frein. Le siège 18 est ouvert vers l'extrémité de la partie cylindrique 17 du pivot 12-17 par une fente 19, afin de permettre l'insertion et l'accrochement de la tête 20 de la tringle 21.

Une coiffe de protection en caoutchouc 24 est appliquée à la tête 2 du cylindre 1 de l'étrier du frein, dans le but de couvrir et de protéger la première partie 12 du pivot 12-17, ses paliers 3, le mécanisme à excentrique 13,10 et les parties y connectées. Cette coiffe 24 forme, d'un côté, un capuchon 25 qui couvre l'extrémité libre de la première partie 12 du pivot 12-17, et du côté opposé elle forme un manchon 26 inséré sur le pivot 12-17 et qui serre d'une façon étanche, par un accouplement coulissant, la partie initiale cylindrique 15 du pivot. Par cette disposition, l'étanchéité pendant le mouvement est réalisée radialement sur le rayon le plus petit possible, et donc avec un frottement minimal; elle dépend seulement des caractéristiques d'élasticité du matériau de la coiffe 24 et n'est pas modifiée par des jeux ou des tolérances d'assemblage, de sorte qu'elle présente la plus grande fiabilité.

Lorsque la tringle 21 est tirée pour actionner le frein à main, elle agit par sa tête 20 sur la partie terminale 17 du pivot 12-17; la partie intermédiaire 16 fait fonction de levier, et la première partie 12 du pivot est tournée à partir de sa position de repos (dans le sens d'un horloge selon la figure 2) contre l'action du ressort 11, de sorte que l'encoche excentrique 13 pousse la lame 10, le poussoir 7 (en chargeant ainsi les ressorts 9), le dispositif de rattrapage 8, le piston 4 et le poussoir 5, en réalisant ainsi le freinage des roues arrière du véhicule. Lorsque ensuite le frein à main est relâché, lé ressort 11 reconduit le pivot 12-17 à sa position de repos et les ressorts 9 reconduisent le poussoir 7 à sa position de repos, de sorte que le freinage effectué précédemment se termine, et le piston 4 est de nouveau à même d'effectuer le freinage hydraulique quand il est actionné par un liquide sous pression introduit dans le cylindre 1.

Comme on peut le remarquer, le siège 18 et la fente 19 sont usinés dans la partie terminale 17 du pivot 12-17, laquelle est cylindrique. Par conséquence, pendant l'usinage il n'y a aucune difficulté à orienter de toute manière désirée la direction suivant laquelle est usiné le siège 18, afin de la faire correspondre, dans le dispositif assemblé, à la direction de laquelle arrive la tringle 21 dans n'importe quelle installation particulière. De ce fait, le dispositif à levier diffère, pour des installations ayant des exigences différentes, seulement dans ce détail d'usinage, tandis que toutes les restantes caractéristiques structurelles et les opérations productives demeurent unifiées pour les dispositifs destinés à des installations différentes.

Dans la phase d'assemblage du dispositif, à différence de ce qui s'avère pour les formes de réalisation connues, l'installation de la coiffe de protection ne présente aucun problème particulier. En effet, la coiffe de protection 24 doit être simplement insérée sur le pivot 12 jusqu'à porter le manchon 26 sur la partie 15, ensuite la première partie 12 du pivot est montée sur l'étrier du frein, en retenant en une condition déformée la coiffe 24, et enfin cette dernière est insérée sur la tête 2.

Il est avantageux le fait que, après la réalisation de l'assemblage, le pivot 12 est retenu en position d'une manière positive par les bagues élastiques 23, sans interposition d'aucune partie de la coiffe; de ce fait, le pivot ne tend pas à acquérir un jeu axial comme conséquence de l'usure de la coiffe.

**Revendications**

1. Dispositif pour la commande mécanique manuelle d'un frein hydraulique à disque pour véhicule, avec une disposition à pivot (12), excentrique (13) et levier (16), logée dans la tête (2) du cylindre (1) de l'étrier du frein à actionnement hydraulique pour commander mécaniquement le déplacement du piston (4) installé dans le cylindre (1), le pivot (12-17) comprenant une première partie (12) destinée à être insérée dans l'intérieur de la tête (2) du cylindre (1), et présentant une conformation habituelle à came (13), et s'étendant lui-même, à partir d'une extrémité de ladite première partie (12), par une partie (16) pliée ou courbée, formant levier et pourvue à son extrémité (17) de moyens (18,19) pour l'accrochage de la tringle d'actionnement (21), caractérisé par le fait que ledit pivot (12-17) présente, à partir de ladite extrémité de la première partie (12), une partie initiale (15) cylindrique destinée à coopérer avec une coiffe de protection (24), une partie intermédiaire cylindrique (16) courbée de 180° formant levier, et une partie terminale cylindrique (17) dans laquelle sont usinées les conformations (18-19) destinées à recevoir la connexion de la tringle d'actionnement (21), lesdites parties initiale (15) intermédiaire (16) et terminale (17) étant d'une seule partie en acier tréfilé.

2. Dispositif de commande selon la revendication 1, caractérisé en ce que la coiffe de protection (24) est une coiffe en caoutchouc ou en matériau similaire, disposée pour être insérée sur la tête (2) du cylindre (1) de l'étrier du frein et ayant une partie (26) sous forme de manchon adaptée pour établir l'étanchéité pendant le mouvement en prenant appui en direction radiale sur ladite partie initiale cylindrique (15) du pivot (12-17).

3. Dispositif de commande selon la revendication 1, caractérisé en ce que lesdits moyens (18,19) pour l'accrochage de la tringle d'actionnement (21) comprennent un siège (18) formé dans ladite partie cylindrique terminale (17) du pivot, et une fente (19) pour l'introduction de la tringle (21), ces conformations pouvant être orientées de façon différente sur ladite partie cylindrique (17) selon les exigences d'installation.

4. Dispositif de commande selon la revendication 1, caractérisé en ce que ladite première partie (12) du pivot est délimitée par des gorges (14) disposées pour recevoir des bagues élastiques (23) destinées à prendre appui directement contre des parties de palier (3) formées par la tête (2) du cylindre (1).

## Claims

1. Device for the manual mechanical control of a hydraulic disc brake for a vehicle, having a pivot (12), eccentric (13) and lever (16) arrangement, set in the head (2) of the cylinder (1) of the hydraulically actuated brake caliper to control mechanically the movement of the piston (4) installed in the cylinder (1), the pivot (12-17) comprising a first part (12) intended to be inserted in the interior of the head (2) of the cylinder (1), and showing a usual cam structure (13), and extending itself, from one extremity of said first part (12), by a folded or curved part (16) forming a lever and provided at its extremity (17) with means (18, 19) for attaching the actuating rod (21), characterized by the fact that said pivot (12-17) presents, from said extremity of the first part (12), an initial cylindrical part (15) intended to cooperate with a protecting cover (24), an intermediate cylindrical part (16) curved through 180° forming a lever, and a terminal cylindrical part (17) in which the configurations (18-19) intended to receive the connection of the actuating rod (21) are machined, said initial (15) intermediate (16) and terminal (17) parts being made from a single piece of drawn steel.

2. Control device according to Claim 1, characterized in that the protecting cover (24) is a cover made from rubber or a similar material, arranged to be inserted onto the head (2) of the cylinder (1) of the brake caliper and having a part (26) in the form of a sleeve adapted to create the seal during movement by pushing in a radial direction on said initial cylindrical part (15) of the pivot (12-17).

3. Control device according to Claim 1, characterized in that said means (18, 19) for attaching the actuating rod (21) comprise a seat (18) formed in said terminal cylindrical part (17) of the pivot, and a slit (19) for the introduction of the rod (21), these configurations being able to be oriented in a different manner on said cylindrical part (17) according to the requirements of installation.

4. Control device according to Claim 1, characterized in that said first part (12) of the pivot is delimited by grooves (14) placed to receive elastic rings (23) intended to press directly against bearing parts (3) formed by the head (2) of the cylinder (1).

## Ansprüche

1. Vorrichtung für die mechanische Betätigung von Hand einer hydraulischen Fahrzeugscheibenbremse, mit einer Schwenkvorrichtung (12), Exzenter (13) und Hebel (16), untergebracht im Kopf (2) des Zylinders der Gabel der hydraulisch betätigten Bremse zur mechanischen Verstellung des im Zylinder (1) eingebauten Kolbens (4), dem Drehbolzen, (12-17) bestehend aus einem ersten beil (12) zum Einbau innerhalb des Kopfes (2) des Zylinders (1), was eine übliche Nockenkonfiguration (13) darstellt, und welcher selbst ab dem einen Ende des genannten ersten Teils (12), durch einen gebogenen oder gekrümmten Teil (16) verlängert wird, einen Hebel bildet und an seinem Ende (17) mit Elementen (18, 19) zum Einhängen der Betätigungsstange (21) versehen ist, gekennzeichnet durch die Tatsache, daß der genannte Drehbolzen (12-17) ab dem genannten Ende des ersten Teils (12) einen zylindrischen Anfangsteil (15) zum Zusammenwirken mit einer Schutzhaube (24), einen zylindrischen, um 180° gekrümmten Mittelteil (16), welcher einen Hebel bildet, und einen zylindrischen Endteil (17) darstellt, in welchem die Konfigurationen (18-19) zur Aufnahme der Verbindung der Betätigungsstange (21) eingearbeitet sind, wobei der genannte Anfangsteil (15), Mittelteil (16) und Endteil (17) ein einziges Teil aus gezogenem Stahl bilden.

2. Betätigungsvorrichtung gemäß Anspruch 1, dadurch gekennzeichnet, daß die Schutzhaube (24) aus Kautschuk oder ähnlichem Werkstoff ist, so angeordnet, daß sie auf den Kopf (2) des Zylinders (1) der Bremsgabel gestülpt wird und ein Teil (26) in Form einer Paßmanschette hat, um die Dichtigkeit während der Bewegung herstellt, indem es sich in radialer Richtung auf dem genannten zylindrischen Anfangsteil (15) des Drehbolzens (12-17) abstützt.

3. Betätigungsvorrichtung gemäß Anspruch 1, dadurch gekennzeichnet, daß die genannten Elemente (18, 19) für das Einhängen der Betätigungsstange (21) einen Sitz (18), ausgebildet im genannten zylindrischen Endteil (17) des Drehbolzens, sowie` einen Schlitz (19) für die Einführung der genannten Stange (21) haben, wobei diese Konfigurationen auf verschiedene Weise auf dem genannten zylindrischen Teil (17) gemäß den Einbauanforderungen geschwenkt werden können.

4. Betätigungsvorrichtung gemäß Anspruch 1, dadurch gekennzeichnet, daß der genannte erste Teil (12) des Drehbolzens durch die Auskehlungen (14) für die Aufnahme der elastischen Ringe (23) zur direkten Abstützung gegen die Lagerteile (3), gebildet aus dem Kopf (2) des Zylinders (1) begrenzt wird.

FIG. 1

FIG. 2

FIG. 3

FIG. 4

7